# EUROPEAN PATENT APPLICATION

(11) **EP 4 458 744 A1**
(43) Date of publication of application: **06.11.2024**
(21) Application number: 23171146.6
(22) Date of filing: 02.05.2023
(51) Int. Cl.: B65G 54/02, G01N 35/04

(54) **TRANSPORT DEVICE AND LABORATORY SAMPLE DISTRIBUTION SYSTEM**

(71) Applicant: Roche Diagnostics GmbH, 68305 Mannheim (DE); F. Hoffmann-La Roche AG, 4070 Basel (CH)
(72) Inventor: Sharpe, Nathaniel, Cambridge, MA 02139 (US); Nussbaum, Matthew, Winchester, MA 01890 (US); Edelmann, Matthias, 70734 Fellbach (DE); Bates, Christopher William, 71732 Tamm (DE)
(74) Representative: Patentanwälte Ruff, Wilhelm, Beier, Dauster & Partner mbB

(57) **Abstract**

The invention relates to a transport device (1) for a laboratory sample distribution system (50), the transport device (1) comprising a top cover (2) having a transport surface (3), the transport surface (3) being adapted to carry sample container carriers (60), an electromagnetic actuation assembly (4), the electromagnetic actuation assembly (4) being adapted to generate a magnetic field at the transport surface (3) for magnetic drive-interaction with a sample container carrier (60) placed thereon, a support structure (5) for carrying the actuation assembly (4), a sensor board (6) being arranged in between the support structure (5) and the top cover (2), the sensor board (6) being adapted to detect a position of a sample container carrier (6) placed on the transport surface (3) with respect to the transport device (1), and elastic elements (7) which are biased in between the sensor board (6) and the support structure (5) so that the sensor board (6) is held flush against an inside surface (8) of the top cover (2) by a biasing force resulting from the biasing of the elastic elements (7).

## Description

The invention relates to a transport device for a laboratory sample distribution system. Furthermore, the invention relates to such a laboratory sample distribution system.

Laboratory sample distribution systems are commonly used within laboratory automation systems providing for a partial or full automation of a laboratory. Such a laboratory automation system can comprise a number of laboratory stations to which samples can be distributed by the laboratory sample distribution system. Typically, such a laboratory sample distribution system is adapted to transport samples to be analyzed to the laboratory stations and away from the laboratory stations. Therein, the laboratory sample distribution system usually comprises a transport device having a sensor board for detecting a position of sample container carriers, the sample container carriers being movable on a transport surface of the transport device.

It is an object of the present invention to provide for a transport device and a laboratory system having such a transport device which have improved properties. In particular, reliable and precise position detection of sample carriers is to be achieved.

This object is solved by the subject-matter of the independent claims. Preferred embodiments are subject-matter of the dependent claims.

A transport device according to the invention is adapted to be used in a laboratory sample distribution system. The transport device comprises a top cover which has a transport surface. The transport surface is adapted for carrying sample container carriers. Each of the sample container carriers can be adapted for holding a sample container, respectively. The transport device comprises an electromagnetic actuation assembly. The electromagnetic actuation assembly is adapted to generate a magnetic field at the transport surface for magnetic drive-interaction with a sample container carrier placed thereon. In other words: Sample container carriers placed on the transport surface can be driven along the transport surface by magnetic drive-interaction resulting from the magnetic field generated by the electromagnetic actuation assembly. The transport device furthermore has a support structure for carrying the actuation assembly. The actuation assembly can be mounted to the support structure. The actuation assembly can comprise a number of electric coils which can be, in particular selectively, fed an electric current for generating the electric field. The transport device comprises a sensor board which is arranged in between the support structure and the top cover. Therein, the sensor board is adapted to detect a position of a sample container carrier placed on the transport surface with respect to the transport device. The transport device has elastic elements, for example rubber bumpers. The elastic elements are biased in between the sensor board and the support structure so that the sensor board is held flush against an inside surface of the top cover by a biasing force resulting from the biasing of the elastic elements. Thus, the elastic elements can push the sensor board towards the inner surface. The elastic elements can act as a spring to absorb forces acting on the transport surface. The elastic elements can flexibly transmit a force acting on the support structure to the sensor board. It is beneficial, if not crucial, for the position of a sample container to be detected by the sensor board that the sensor board is well in contact with the inside surface of the top cover. Thus, the sensor board being pressed against the inner surface by the biasing force allows for particularly reliable and precise position detection.

According to an embodiment of the invention, at least one of the elastic elements has a substantially semi-spherical portion. The semi-spherical portion has a flat side which faces the support structure. Preferably, the flat side is at least partially seamed by a radial protrusion of the respective elastic element. The flat side of such an elastic element allows for precise positioning and attachment of the elastic element to the support structure, for instance by an adhesive. The semi-spherical portion enables progressive properties of the biasing force in dependence on a deformation of the elastic element between the sensor board and the support structure. Furthermore, the semi-spherical portion leads to the sensor board and the elastic elements contacting in a particular small contact area. The support structure can have openings assigned each of the elastic elements, the elastic elements being partially received by one of these openings, respectively.

According to another embodiment of the invention, the elastic elements are distributed evenly, in particular equidistantly relative to one another, around a center of the sensor board. This allows for pressing the sensor board against the inside surface of the top cover particularly evenly. Pressing the sensor board against the inside surface evenly comes along with desirable maintenance of an overall flatness of the transport device. Forces engaging with the top cover can thus be absorbed evenly as to not result in sink marks and/or bending of the transport surface. As an alternative or in addition, the elastic elements are arranged offside a symmetric axis of the inner surface. In this way, a particular small number of elastic elements can be sufficient to hold the sensor board flush against the inner surface. As an alternative or in addition, at least three, in particular four, elastic elements are present. Three elastic elements may be sufficient for avoiding tipping of the sensor board. Four elastic elements can be particularly convenient if the top cover and the sensor board have a rectangular, in particular square, shape. The center of the sensor board may correspond to a gravity projection of a center of the transport surface onto the sensor board. The center of the sensor board and/or the center of the transport surface may lay on a common virtual axis, the common virtual axis being perpendicular to the transport surface.

According to another embodiment of the invention, the support structure has a grid-shaped body. Therein, the grid-shaped body comprises a plurality of recesses, the recesses being arranged in a grid-pattern. The recesses may be through holes. The support structure has a plurality of spacer portions, at least one of which protrudes from the grid-shaped body at an edge of each recess toward the sensor board. A number of spacer portions can be distributed around each recess. For example, four spacer portions can be arranged around each recess, in particular forming a four-pointed crown shape. The spacer portions can serve to prevent a top ending of coils received by the recesses from getting in contact with the sensor board. In particular, the spacer portions distributed around each recess serve to prevent the top endings of the coils getting caught anywhere when the top cover is removed.

According to another embodiment of the invention, the support structure and/or the sensor board and/or the top cover and/or the actuation assembly have a plurality of integral positioning elements, respectively. In other words: At least one of the support structure, the sensor board, the top cover and the actuation assembly can have a plurality of integral positioning elements. The positioning elements are adapted for alignment of the respective components having the positioning elements relative to one another. Such integral positioning elements can drastically simplify assembling the transport device.

According to another embodiment of the invention, the support structure, at its lateral edges and/or corners, has complementary ledges and/or snap hooks for detachably coupling several support structures of several transport devices aside one another. Preferably, the ledges and/or snap hooks are distributed along the lateral edges and/or corners such that coupling is only possible in one orientation of the support structure of one transport device relative to a respective further support structure. By coupling several transport devices of equal or same specification aside one another, a transport device arrangement can be set up. Such a transport device assembly can have a common transport surface comprising each of the transport surfaces of the neighboring transport devices. In this way, the common transport surface can be adapted flexibly to overcome a specific distance in between laboratory stations of a laboratory sample distribution system.

According to another embodiment of the invention, the elastic elements are biased, in particular compressed, by a screw connection holding the top cover at the support structure. This can result in a particular robust and at the same time well maintainable transport device. The screw connection can at least partially transmit a force acting on the transport surface to the support structure.

According to another embodiment of the invention, the support structure has integral ribs for stiffening a body of the support structure and/or for guiding cooling air through an intermediate space formed in between the sensor board and the support structure. The support structure can add significant stiffness to the overall transport device. Stiffening the body of the support structure can benefit maintenance of an overall flatness of the transport device. The overall flatness of the transport device can be crucial to precise positioning of the sample container carriers on top of the transport surface. By integral ribs guiding cooling air through the intermediate space, the cooling air can be directed to areas of the transport device particularly prone to heat.

A laboratory sample distribution system according to the invention comprises a transport device according to the invention as described above. The laboratory sample distribution system furthermore comprises several sample container carriers which are placeable on the transport surface of the transport device. Each of the sample container carriers has a magnetically active device for the magnetic drive-interaction with the magnetic field generated by the electromagnetic actuation assembly. The laboratory sample distribution system has a control device which is configured to control the electromagnetic actuation assembly as to control movement of the sample container carriers placed on the transport surface. The afore-mentioned advantages of the transport device according to the invention transfer to the laboratory sample distribution system according to the invention having such a transport device.

Preferably, the laboratory sample distribution system has a transport device arrangement of several transport devices coupled to one another so that the transport surfaces of said transport devices form a common transport surface. Within the transport device arrangement, the transport devices can be modularly coupled to match the common transport surface to a specific distance in between laboratory stations of the laboratory sample distribution system.

Further advantages and features of the invention arise from the claims as well as from the following description of a preferred embodiment of the invention, which is depicted by the drawings. Therein, equal reference signs relate to equal or similar or functionally equal components.

It is to be understood that the features mentioned above as well as the features described below are not only usable in the stated combination, respectively, but also in other combinations or solely, without leaving the frame of the present invention.

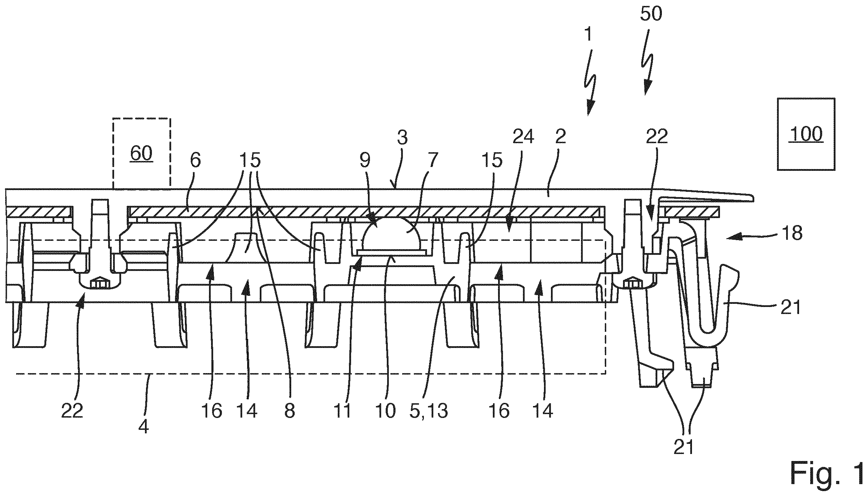

- Fig. 1: schematically depicts, in a cross-sectional view, an embodiment of a laboratory sample distribution system according to the invention, the laboratory sample distribution system having a transport device according to the invention,
- Fig. 2: illustrates, in a perspective view, a top cover for the transport device of fig. 1, and
- Fig. 3: illustrates, in a perspective view, a support structure for the transport device of fig. 1.

A laboratory sample distribution system 50 may be adapted for use in a laboratory automation system. The laboratory sample distribution system 50 is configured to transport samples to be analyzed within the laboratory automation system. The laboratory automation system can have laboratory stations for analyzing samples. The laboratory sample distribution system 50 comprises several sample container carriers 60. Each sample container carrier 60 is adapted to carry a sample container. Such a sample container can contain a sample. Furthermore, the laboratory sample distribution system 50 comprises a transport device 1 according to the invention.

The transport device 1 comprises a top cover 2. The top cover 2 has a transport surface 3. The transport surface 3 is adapted to carry the sample container carriers 60. Accordingly, the sample container carriers 60 are placeable on the transport surface 3. The transport device 1 has an electromagnetic actuation assembly 4. The electromagnetic actuation assembly 4 is adapted to generate a magnetic field at the transport surface 3 for magnetic drive-interaction with a sample container carrier 60 placed on top of the transport surface 3. Therein, each of the sample container carriers 60 has a magnetically active device. The magnetically active device is adapted for magnetic drive-interaction with the magnetic field generated by the electromagnetic actuation assembly 4.

The laboratory sample distribution system 50 comprises a control device 100. The control device 100 is configured to control the electromagnetic actuation assembly 3 as to thus control movement of the sample container carriers 60 placed on the transport surface 3. By controlling the transport device 1, the sample container carriers 60 holding sample containers can be moved along the transport surface 3 for the samples to be distributed between laboratory stations.

The transport device 1 comprises a support structure 5 for carrying the actuation assembly 4. Therein, the transport device 1 has a sensor board 6. The sensor board 6 is arranged in between the support structure 5 and the top cover 2. The sensor board 6 is adapted to detect a position of a sample container carrier 60 placed on the transport surface 3 with respect to the transport device 1. The position of a sample container carrier 60 detected by the sensor board 6 can be fed back to the control device 100 of the laboratory sample distribution system 50.

The transport device 1 comprises elastic elements 7. The top cover 2 has an inside surface 8. The elastic elements 7 are biased in between the sensor board 6 and the support structure 5 so that the sensor board 6 is held flush against the inside surface 8 by a biasing force resulting from the biasing of the elastic elements 7. For example, the transport device 1 has a screw connection 22. The top cover 2 and the support structure 5 can be held against one another by the screw connection 22. Therein, the elastic elements 7 can be biased, in particular compressed, by the screw connection 22 holding the top cover 2 at the support structure 5. The elastic elements 7 can form a suspension for the sensor board 6. Said suspension can allow for elastic compensation and damping of, for instance inertia-related, movement of the sensor board 6 relative to the support structure 5.

For example, at least one of the elastic elements 7 has a substantially semi-spherical portion 9. The semi-spherical portion 9 has a flat side 10. The flat side 10 faces the support structure 5. The flat side 10 can be at least partially seamed by a radial protrusion 11 of the elastic element 7. The transport device 1 can have three elastic elements 7. In the embodiment shown in the figures, four elastic elements 7 are present, each of which having the substantially semi-spherical portion 9 and the radial protrusion 11 in this case completely seaming the flat side 10. The elastic elements 7 are distributed evenly around a center 2 of the sensor board 6. Therein, the elastic elements 7 can be distributed equidistantly around the center 12. In the example of the figures, the elastic elements 7 are arranged offside a symmetric axis of the inner surface 8. In particular, none of the elastic elements 7 is arranged on any symmetric axis of the inner surface 8.

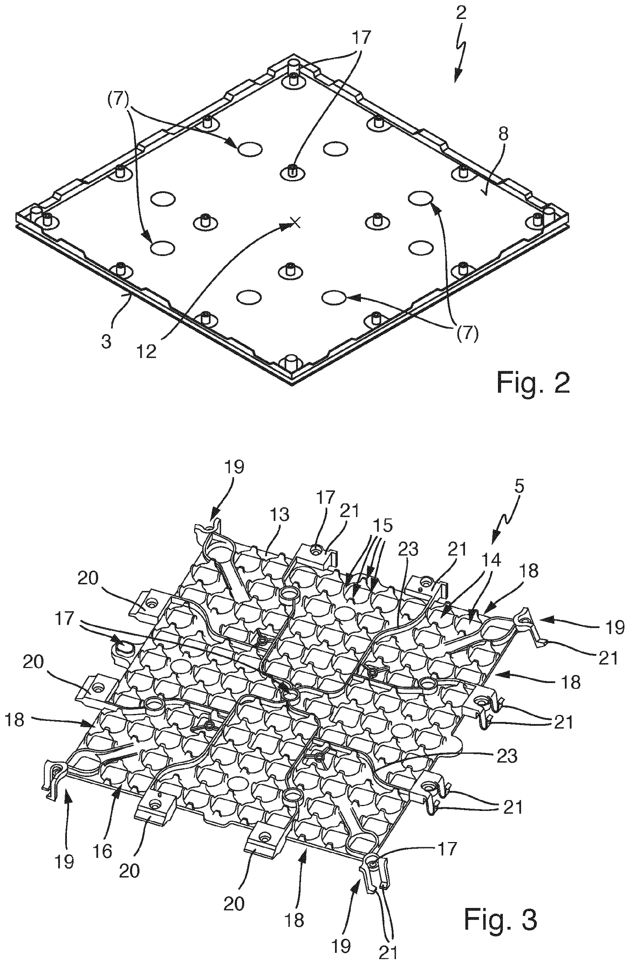

As best to be seen in fig. 3, the support structure 5 has a grid-shaped body 13. The grid-shaped body 13 comprises a plurality of recesses 14. The recesses 14 can have an angular or - as shown in the figures - rounded, for example circular, cross-sectional shape. The recesses 14 are arranged in a grid-pattern. The grid-pattern can comprise lines and columns of recesses 14.

Said lines and columns may be perpendicular to gravity and/or to one another. The support structure 5 comprises a plurality of spacer portions 15. At least one of these spacer portions 15 protrudes from the grid-shaped body 13. Each recess 14 has an edge 16. Therein, at the edge 16 of each recess 14 at least one of the spacer portions 15 is present. The spacer portions 15 arranged at the edges 16 of the recesses 14 protrude toward the sensor board 6. In the example shown in the figures, four spacer portions 15 are arranged at most of the edges 16.

The transport device 1 as well as its top cover 2, its support structure 5, its electromagnetic actuation assembly 4 and/or its sensor board 6 may have a substantially plate-like or panel-like shape of rectangular, in particular square, circumference. Each of the afore-mentioned components of the transport device 1 may have a circumference of the same type of shape so that said components may be arranged in a stack-like manner when assembling the transport device 1. The circumferences may extend in respective virtual planes, these virtual planes being parallel to one another and perpendicular to gravity.

In the embodiment shown in the figures, the support structure 5 and the top cover 2 each have a plurality of integral positioning elements 17. The positioning elements 17 of the support structure 5 and the positioning elements 17 of the top cover 2 are shaped and arranged complementary. The integral positioning elements 17 are adapted for alignment of the support structure 5 and the top cover 2 relative to one another. As an alternative or in addition, the sensor board 6 and/or the actuation assembly 4 can have a plurality of integral positioning elements 17 for alignment relative to one another and/or for alignment relative to the support structure 5 and/or the top cover 2. The support structure 5 can have two holes, one at a center of the support structure 5 and one near or at an edge 18 of the support structure 5. The transport device 1 may have a back iron not shown in the figures. Both holes can interfere with corresponding pins present on the back iron to accurately center and position the support structure 5 relative to the back iron. The integral positioning elements 17 can transmit a force to the transport surface 3, the transmitted force acting on the sensor board 6 and/or on the screw connection 22 holding the support structure 5 at the top cover 2.

The support structure 5 according to fig. 3 has integral ribs 23. The integral ribs 23 are adapted for stiffening the body 13 of the support structure 5. Furthermore, the integral ribs 23 are configured to guide cooling air through an intermediate space 24, the intermediate space 24 being formed in between the sensor board 6 and the support structure 5.

The support structure 5 has lateral edges 18 and corners 19. The support structure 5 comprises ledges 20 and snap hooks 21. The ledges 20 and snap hooks 21 are complementary in shape and arrangement. The ledges 20 and the snap hooks 21 are arranged at the lateral edges 18 and the corners 19. The ledges 20 and the snap hooks 21 can be distributed along the lateral edges 18 and the corners 19. As best to be seen in fig. 3, snap hooks 21 are present at two lateral edges 18 and a corner 19 directly in between these lateral edges 18. The remaining two lateral edges 18 have ledges 20. The ledges 20 and the snap hooks 21 are adapted for detachably coupling several support structures 5 of several transport devices 1 aside one another. In this way, several transport devices 1 can be mounted next to one another as to cover a multiple of a surface of a single transport device 1. Therewith, a common transport surface comprising all the transport surfaces 3 of the several transport devices 1 attached to one another can be achieved. Therein, the ledges 20 and the snap hooks 21 are arranged and shaped such that coupling is only possible in one orientation of the support structure 5 relative to a respective further support structure. The arrangement and/or shape of the ledges 20 and the snap hooks 21 can thus realize a poka-yoke principle. Coupled transport devices 1 can form a transport device arrangement. All transport devices 1 of such a transport device arrangement may be controlled by a common control device 100.

## Claims

1. Transport device (1) for a laboratory sample distribution system (50), the transport device (1) comprising
- a top cover (2) having a transport surface (3), the transport surface (3) being adapted to carry sample container carriers (60),
- an electromagnetic actuation assembly (4), the electromagnetic actuation assembly (4) being adapted to generate a magnetic field at the transport surface (3) for magnetic drive-interaction with a sample container carrier (60) placed thereon,
- a support structure (5) for carrying the actuation assembly (4),
- a sensor board (6) being arranged in between the support structure (5) and the top cover (2), the sensor board (6) being adapted to detect a position of a sample container carrier (60) placed on the transport surface (3) with respect to the transport device (1), and
- elastic elements (7) which are biased in between the sensor board (6) and the support structure (5) so that the sensor board (6) is held flush against an inside surface (8) of the top cover (2) by a biasing force resulting from the biasing of the elastic elements (7).

2. Transport device (1) according to claim 1, **characterized in that**
at least one of the elastic elements (7) has a substantially semi-spherical portion (9) a flat side (10) of which faces the support structure (5), wherein preferably the flat side (10) is at least partially seamed by a radial protrusion (11) of the respective elastic element (7).

3. Transport device (1) according to any of the preceding claims, **characterized in that**
- the elastic elements (7) are distributed evenly, in particular equidistantly, around a center (12) of the sensor board (6), and/or
- the elastic elements (7) are arranged offside a symmetric axis of the inner surface (8), and/or
- at least three, in particular four, elastic elements (7) are present.

4. Transport device (1) according to any of the preceding claims, **characterized in that**
- the support structure (5) has a grid-shaped body (13),
- the grid-shaped body (13) comprises a plurality of recesses (14), the recesses (14) being arranged in a grid-pattern, and
- the support structure (5) has a plurality of spacer portions (15) at least one of which protrudes from the grid-shaped body (13) at an edge (16) of each recess (14) toward the sensor board (6).

5. Transport device (1) according to any of the preceding claims, **characterized in that** the support structure (5) and/or the sensor board (6) and/or the top cover (2) and/or the actuation assembly (4) have a plurality of integral positioning elements (17) for alignment of the support structure (5) and/or the sensor board (6) and/or the top cover (2) and/or the actuation assembly (4) relative to one another.

6. Transport device (1) according to any of the preceding claims, **characterized in that**
- the support structure (5), at its lateral edges (18) and/or corners (19), has complementary ledges (20) and/or snap hooks (21) for detachably coupling several support structures (5) of several transport devices (1) aside one another,
- the ledges (20) and/or snap hooks (21) preferably being distributed along the lateral edges (18) and/or corners (19) such that coupling is only possible in one orientation of the support structure (5) relative to a respective further support structure.

7. Transport device (1) according to any of the preceding claims, **characterized in that** the elastic elements (7) are biased, in particular compressed, by a screw connection (22) holding the top cover (2) at the support structure (5).

8. Transport device (1) according to any of the preceding claims, **characterized in that** the support structure (5) has integral ribs (23) for stiffening a body (13) of the support structure (5) and/or for guiding cooling air through an intermediate space (24) formed in between the sensor board (6) and the support structure (5).

9. Laboratory sample distribution system (50), comprising
- a transport device (1) according to any of the preceding claims,
- several sample container carriers (60) placeable on the transport surface (3), each of the sample container carriers (60) having a magnetically active device for the magnetic drive-interaction with the magnetic field generated by the electromagnetic actuation assembly (4),
- a control device (100) being configured to control the electromagnetic actuation assembly (3) as to control movement of sample container carriers (60) placed on the transport surface (3).
